# EUROPEAN PATENT APPLICATION

(11) **EP 4 764 262 A1**
(43) Date of publication of application: **24.06.2026**
(21) Application number: 25223568.4
(22) Date of filing: 15.12.2025
(51) Int. Cl.: F16H 61/4078, F16H 61/42, E02F 9/22

(54) **AGRICULTURAL OR WORK VEHICLE**

(30) Priority: 23.12.2024 IT 202400029754
(71) Applicant: CNH Industrial Italia S.p.A., 10156 Torino (IT)
(72) Inventor: Garramone, Adriano, 10156 Turin (IT); Liberti, Stefano, 10156 Turin (IT); Gravili, Andrea, 10156 Turin (IT)
(74) Representative: CNH Industrial IP Department

(57) **Abstract**

Agricultural or work vehicle comprising an internal combustion engine (E), an electro-hydraulic circuit (HC) for powering at least one hydraulic actuator (Al - A3) by means of a respective closed-center control valve (V1 - V3), comprising a first hydraulic pump (P) operatively connected to the internal combustion engine (E) to be driven in rotation by it to power said valves (V1 - V3) by means of a hydraulic supply line (PP), a transmission having a hydrostat (HY) comprising a second hydraulic pump (HP) operatively connected to the internal combustion engine (E) to be driven in rotation by it and a pair of hydraulic lines (F, R), wherein the first hydraulic pump has a variable displacement with a displacement value that is a function of a sensing signal generated by a sensing line (LS) connected downstream of said control valve (V1 - V3) and by a supply pressure signal generated by the supply line (PP). A compensation valve (A) is arranged to connect said pair of hydraulic lines (F, R) with said supply line (PP), wherein the compensation valve is controlled as a function of the sensing signal and the supply signal.

## Description

### Field of the invention

The present invention relates to the field of agricultural or work vehicles and specifically to a vehicle equipped with a hydrostatic transmission and a hydraulic working tool powered by a closed-centre hydraulic circuit.

### State of the art

Work or agricultural vehicles are generally equipped with an internal combustion prime mover that has the task of allowing the movement of the vehicle itself as well as powering the on-board work devices, such as an articulated arm, a lift, etc....

A work device is hydraulically operated. It is operated by a double-action hydraulic actuator powered by a first hydraulic pump driven in rotation by the prime mover. Generally, the transmission to transfer the motion of the prime mover to the wheels is of the hydraulic type and includes a hydrostat that includes a second variable displacement hydraulic pump, which, in turn, operates a hydraulic motor, which can have either a fixed or variable displacement.

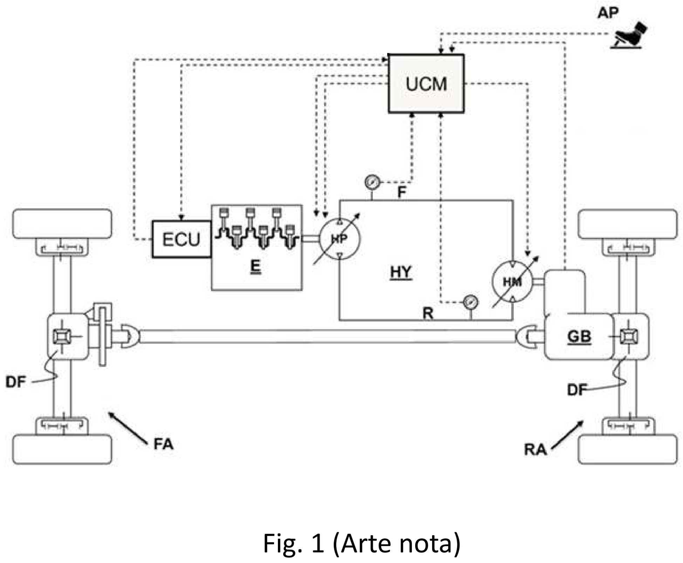

Figure 1 of the prior art shows an example of a hydrostatic transmission of an agricultural or work vehicle.

The second hydraulic pump HP, with variable displacement, and the hydraulic motor HM are interconnected in a known manner to form a hydrostat HY, by means of a so-called highpressure hydraulic line F or "forward" line and a low-pressure hydraulic line R or "return" of the hydraulic oil to the hydraulic pump.

A processing unit UCM has the task of monitoring the operation of the hydrostat and receives as input a signal of the position of an accelerator pedal AP and a signal of the vehicle speed VS.

The prime mover E is controlled by a processing unit ECU configured to receive as input a control signal from the processing unit UCM and to send to the processing unit UCM a signal representing the rotation speed of the prime mover ES.

Between the hydraulic motor and the wheels there is often, but not always, a gearbox GB with discrete ratios. Very often there are just two ratios, to facilitate the autonomous movement of the vehicle from one place to another work site.

The motion is generally transmitted to the vehicle wheels by means of a differential DF. Furthermore, the transmission can be four-wheel drive, therefore, a front differential DF associated with the front axle FA and a rear differential DF associated with the rear axle RA are identified.

Generally, the rotation speed of the prime mover is directly proportional to the position of the accelerator lever AP and the displacement of the second hydraulic pump is proportional to the rotation speed of the prime mover according to a predetermined mapping, while the displacement of the hydraulic motor is inversely proportional to the speed of the vehicle and a function of the load perceived by the hydraulic motor.

Therefore, a greater speed of the vehicle is a consequence of a greater rotation speed of the prime mover.

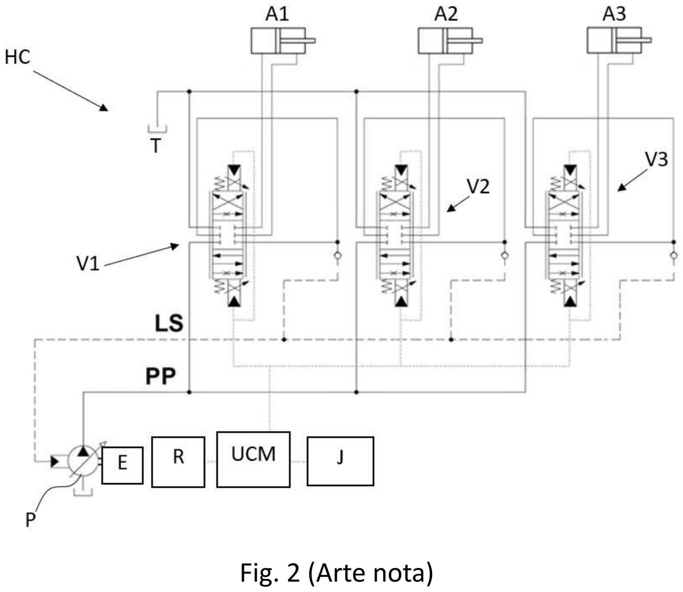

Figure 2 of the prior art shows a hydraulic power circuit of an agricultural or work vehicle to power the aforementioned work device.

One can again recognize the processing unit UCM, operationally connected to a man-machine interface device J, in particular a joystick and/or a wheel R, generally arranged on the joystick.

Generally, when the working device is an articulated arm, a forward and backward deviation affects a first hydraulic actuator A1 and a deviation to the right and left affects a second hydraulic actuator A2 to control the lifting of the arm and the position of the bucket in relation to it.

An additional hydraulic actuator A3 may also be present to perform an auxiliary function, such as a hydraulic lift. Said additional actuator can be controlled by the roller R. The actuators A1 - A3 are of the double action type with a mobile septum operationally connected with a reversible extractable stem to actuate a segment of the working device. The first pump P has the task of feeding the actuators A1 - A3 via the respective electro-hydraulic valves V1 - V3.

The position of the valves can be controlled via the joystick, whose signal is received by the processing unit, which consequently controls the stroke of the valve slider. The first pump P has a variable displacement and the displacement value is a function of the strokes of the spools of the valves V1-V3 and of the load sensed by the so-called "load sensing" line LS, so that the displacement of the hydraulic pump varies so that, for a given stroke of the spools, the pressure difference between the supply line PP and a sensing line LS is approximately equal to a predefined pressure value, called "margin", generally equal to about 20 - 25 bar.

The sensing line is connected to the output of the valves V1 - V3, so as to detect the hydraulic load, or the current pressure, of the actuators A1-A3.

Depending on the specific closed-center hydraulic architecture with load sensing, the speed of the motor E can influence the response to deviations of the joystick lever and the precision of the operation, for example, the speed of the movement of the working device.

The so-called "upper dead band" is known. This is caused by the "saturation" of the first hydraulic pump, which occurs when the flow rate of oil generated by the first pump is insufficient to satisfy the request of the hydraulic actuators connected to the first hydraulic pump.

This happens because, although it can regulate the relative displacement, the flow rate still depends on the rotation speed of the pump, which is function of the rotation speed of the prime mover and therefore of the position of the accelerator pedal.

The dead band consists in the fact that, when the first hydraulic pump is in "saturation", the actuation speed of a hydraulic actuator is proportional to the value of the joystick deflection angle only up to a predetermined angle threshold, beyond which, the actuation speed remains unchanged.

The arc included between the aforementioned threshold and the position of maximum deviation of the joystick lever identifies the dead band.

In other words, the actuator controlled by the joystick responds in terms of actuation speed up to a predetermined joystick deflection angle threshold, beyond which, this speed remains constant.

The predetermined angle threshold, which is a function of the maximum oil flow generated by the first pump, is therefore minimum at the minimum rotation speed ES of the prime mover and is instead maximum, and corresponding to the position of maximum deviation of the joystick lever, at the maximum rotation speed of the ES prime mover.

In other words, the dead band is not appreciable at the maximum rotation speed of the prime mover.

The margin, however, is constant up to said predetermined joystick deflection angle threshold and decreases as the deviation of the joystick lever increases, until it reaches the minimum value at the position of maximum deviation of the joystick lever.

Unless specifically excluded in the detailed description that follows, what is described in this chapter is to be considered as an integral part of the detailed description.

### Summary of the invention

The purpose of the present invention is to reduce or eliminate the dead band, making the behavior of a hydraulic actuator reactive in a wider deflection range of the joystick lever.

The basic idea of the present invention is to interconnect the hydraulic supply circuit of at least one on-board hydraulic actuator with the hydrostatic transmission so as to complement the first hydraulic pump.

The system implements a compensation valve, which interconnects the hydrostat, specifically both the forward and return lines of the hydrostat, with the supply line of the supply circuit.

The compensation valve is controlled by the pressure signal generated by the sensing line and by the pressure signal generated by the supply line, so as to keep the margin approximately constant.

Preferably, the system implements two pressure sensors, respectively on the supply line and on the sensing line, operationally connected to the processing unit. The latter is configured to open an optional valve, arranged between the hydrostat and the supply line of the supply circuit, preferably upstream of the compensation valve. Advantageously, it is possible to decide whether or not to exploit the additional capacity provided by the hydrostat in the supply of the at least one hydraulic actuator. Preferably, a non-return valve is arranged between the hydrostat and the supply line of the supply circuit. Preferably, the supply and return lines are connected to the compensation valve by means of a shuttle valve to select the hydrostat line with the highest pressure.

The proposed functionality allows a reduction in cycle times by supplying the missing oil to accelerate the actuation speed of the hydraulic devices and reduce cycle times. According to a preferred aspect of the invention, the processing unit is configured to modify the transmission ratio of the hydrostat, so as to compensate for the flow of hydraulic oil sent by the compensation valve to the actuation circuit.

More preferably, the processing unit is configured to keep the vehicle speed constant by acting on the displacement of the second hydraulic pump and/or on the displacement of the hydraulic motor defining the hydrostat.

The dependent claims describe preferred variants of the invention, forming an integral part of the present specification.

### Brief description of the figures

Further objects and advantages of the present invention will be made clear from the following detailed description of an embodiment thereof (and of variants thereof) and from the attached drawings given purely for explanatory and non-limiting purposes, in which:
Fig. 1 of the prior art shows a propulsion scheme of an agricultural or work vehicle;
Fig. 2 of the prior art shows an electro-hydraulic scheme for powering hydraulic actuators for operating at least one work device;

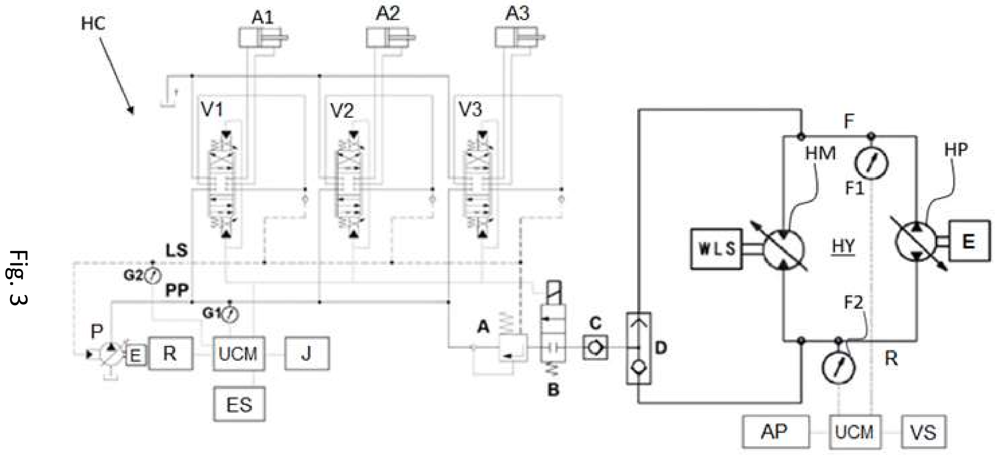

Fig. 3 shows an electro-hydraulic scheme including a propulsion scheme and an electro-hydraulic scheme for powering hydraulic actuators according to a first variant of the invention;

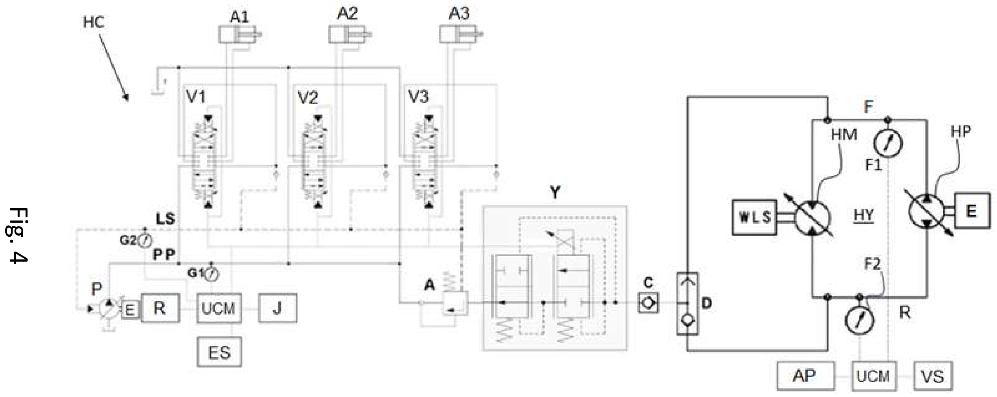

Fig. 4 shows a further variant of the electro-hydraulic scheme of Fig. 3.

The same reference numbers and letters in the figures identify the same elements or components or functions.

It should also be noted that the terms "first", "second", "third", "upper", "lower" and the like may be used here to distinguish various elements. These terms do not imply a spatial, sequential or hierarchical order for the modified elements unless specifically indicated or inferred from the text.

The elements and features illustrated in the various preferred embodiments, including the drawings, may be combined with each other without departing from the scope of protection of this application as described below.

### Detailed description

According to the present invention, the agricultural or work vehicle comprising
- An internal combustion prime mover E,
- a transmission having a hydrostat HY operatively connected to at least one vehicle wheel WLS and
- an electro-hydraulic circuit HC to supply at least one hydraulic actuator A1 - A3 by means of respective control valves V1 - V3 configured as closed center.

According to the prior art, the electro-hydraulic circuit HC includes a first hydraulic pump P operatively connected to a prime mover E to be driven in rotation.

The first hydraulic pump P has variable displacement and the displacement is controlled by means of the sensing line LS, in a manner known in itself.

The supply line PP can be optionally associated with a pressure sensor G1 and the sensing line LS can be optionally associated with a pressure sensor G2 that allow monitoring the pressure variations within the respective lines. Preferably, by means of said pressure sensors G1 and G2, it is possible to calculate the margin and suggest to the human operator the activation of the complementation function object of the present invention.

An expression, of the type "Constant flow" can be associated with this function which allows the human operator to easily remember the effect of the activation of the same function. The hydrostat HY comprises a second hydraulic pump HP and a hydraulic motor HM interconnected by means of a pair of hydraulic ducts F, R.

Each of the hydraulic ducts F, R is associated with a pressure sensor F1, F2 which allows the pressure variations inside the respective ducts to be monitored according to the operating conditions of the vehicle.

In relation to the forward or reverse travel conditions, one of the two ducts assumes a higher pressurization value than the other.

In ordinary conditions, the displacement of the second hydraulic pump is a function of the rotation speed of the prime mover E according to a predetermined mapping. The rotation speed of the prime mover is a function of the position of the accelerator pedal AP. The displacement of the hydraulic motor, on the other hand, depends on the resistance to the advancement of the vehicle, perceived by the hydraulic motor and the speed of the vehicle.

As the displacement of the hydraulic motor decreases, the speed of the vehicle increases. The maximum speed is reached when the second hydraulic pump operates at its maximum displacement and the hydraulic motor operates at its minimum displacement.

According to the present invention, the two ducts F, R are operationally connected to the supply line PP by means of the compensation valve A.

The compensation valve is controlled by a pressure signal carried by the sensing line LS and by a pressure signal carried by the supply line PP, so as to send to the supply line the flow of hydraulic oil strictly necessary to restore a predetermined margin value, for example 20 - 25 bar.

It is recalled that the margin Dp = p - ls, that is, the margin is equal to the difference between the current pressure value p measured on the supply line PP and the current pressure value ls measured on the sensing line.

The drawing of hydraulic oil from the hydrostat by means of the compensation valve A, can cause an imbalance in the behaviour of the hydrostat itself, with a slowing down of the vehicle.

According to a preferred aspect of the invention, when the hydraulic oil is withdrawn from the hydrostat to complement the first hydraulic pump in the supply of at least one of the hydraulic actuators A1 - A3, then, the prime mover ceases to operate in function of the deflection of the accelerator lever AP. In such conditions the accelerator lever controls the speed of the vehicle. More precisely, a deflection angle of the accelerator lever corresponds to a predetermined value of speed of the vehicle.

In other words, while in ordinary conditions, the position of the accelerator lever indicates a value of rotation speed ES of the prime mover E, in conditions of complementation of the hydraulic circuit HC, "constant flow", the deflection of the accelerator lever indicates a value of vehicle speed VS. The vehicle speed is controlled in closed loop.

The interconnection state of the HC circuit and the hydrostat depends on the opening state of the compensation valve. Evidently, they are interconnected when the compensation valve is open.

The opening state of the valve can be monitored in different ways including, for example, monitoring the position of the relative cursor. This position, for example, can be detected by a Hall effect sensor.

In order for the complementation to be effective both in the forward and reverse motion of the vehicle, both the F, R ducts are connected to the supply line by means of non-return valves C or by means of a shuttle valve D.

According to a preferred aspect of the invention, immediately upstream or downstream of the compensation valve A, an ON/OFF type valve B is arranged, which allows the "constant flow" function to be enabled or disabled. This configuration, if enabled, does not depend on the current opening state of the compensation valve A, i.e. it does not depend on the contingent conditions of the hydraulic circuit HC.

This valve B can be controlled to open and close by the user and preferably can be closed automatically by the UCM unit when certain conditions exemplified below occur.

For example, valve B can close automatically if a pressure value measured on one of the R, F lines exceeds a predetermined pressure threshold, for example, of 400 bar.

### Example

According to a preferred aspect of the invention, in the "constant flow" configuration, the control operated on the vehicle speed is performed in closed loop with respect to a reference value mapped on the deflection value of the accelerator lever.

In particular, a feedback control is performed on the displacement of the second hydraulic pump and/or of the hydraulic motor. The rotation speed of the prime mover is mapped as a function of the speed value requested by the accelerator lever.

In other words, in the "constant flow" configuration the accelerator lever sets a vehicle speed value while in the ordinary condition the accelerator lever sets a prime mover speed value and the vehicle speed is dependent on the prime mover speed and on the load perceived by the hydraulic motor.

However, the UCM processing unit can be configured so that if a speed error value, in the closed loop control, exceeds a predetermined threshold, then valve B can be automatically closed so as not to compromise the vehicle's propulsive capabilities.

The human operator can, through an appropriate menu available in a human/machine interface device including a display, enable or disable one of the selectable conditions that lead to the automatic closing of valve B.

For example, a condition that affects the behaviour of the vehicle, but not the safety and durability of the on-board subsystems, is considered selectable. On the contrary, the condition of exceeding the pressure threshold on one of the hydraulic lines F, R is always active and cannot be deactivated as it impacts the safety of the vehicle and the durability of the hydrostat.

According to another preferred variant of the invention, which is combined with any of the previously described variants, the ON/OFF type valve B is replaced by a proportional flow control valve Y.

The proportional valve Y is of the normally closed type and its flow section can be modified inversely proportional to the error signal on the speed of the vehicle with respect to the aforementioned reference value.

Advantageously, in this way, it is possible to complement the first hydraulic pump P with the hydrostat up to a limit condition, beyond which there is a risk of compromising the propulsive capabilities of the vehicle.

In this way, the dead band is not eliminated but reduced, optimizing the use of all the potential of the vehicle.

Between the shuttle valve D and the compensation valve A, a non-return valve C can be provided which prevents, in any operating condition, a circulation of hydraulic oil from the supply line PP towards the hydrostat.

The present invention can be advantageously implemented by means of a computer program which includes coding means for the implementation of one or more steps of the method, when this program is executed on a computer. Therefore, it is intended that the scope of protection extends to said computer program and also to computer-readable means which include a recorded message, said computer-readable means including program coding means for the implementation of one or more steps of the method, when said program is executed on a computer.

Implementation variants to the non-limiting example described are possible, without however departing from the scope of protection of the present invention, including all the equivalent embodiments for a technician in the field, to the content of the claims.

From the description reported above, the technician in the field is able to realize the object of the invention without introducing further construction details.

## Claims

1. Agricultural or work vehicle comprising
- an internal combustion engine (E) prime mover,
- an electro-hydraulic circuit (HC) for powering at least one hydraulic actuator (A1 - A3) by means of a respective closed-center control valve (V1 - V3), comprising a first hydraulic pump (P) operatively connected to the internal combustion engine (E) to be driven in rotation by it to power said valves (V1 - V3) by means of a hydraulic supply line (PP),
- a transmission having a hydrostat (HY) comprising a second hydraulic pump (HP) operatively connected to the internal combustion engine (E) to be driven in rotation by it and a hydraulic motor (HM) operatively connected to at least one vehicle wheel (WLS), wherein the second hydraulic pump and the hydraulic motor are interconnected by means of a pair of hydraulic ducts (F, R),
wherein the first hydraulic pump is a variable displacement pump with a displacement value that is a function of a sensing signal generated by a sensing line (LS) connected downstream of said control valve (V1 - V3) and by a supply pressure signal generated by the supply line (PP),
the vehicle being **characterized in that** it comprises a compensation valve (A) arranged to connect said pair of hydraulic ducts (F, R) with said supply line (PP), wherein the compensation valve is controlled as a function of said sensing signal and said supply signal.

2. Vehicle according to claim 1, further comprising an enabling valve (B) arranged between said pair of hydraulic ducts and said supply line, wherein when said enabling valve (B) is closed, i.e. in ordinary conditions, a displacement value of the second hydraulic pump (HP) is a function of a rotation speed value of the prime mover (E) according to a predetermined mapping and wherein said rotation speed value of the prime mover is a function of an angular deviation of an accelerator pedal.

3. Vehicle according to claim 2, wherein when said enabling valve (B) is open, i.e. in "constant flow" conditions, a vehicle speed value is mapped as a function of an angular deviation of the accelerator pedal.

4. Vehicle according to claim 3, wherein said angular deviation of the accelerator pedal corresponds to a predetermined transmission ratio of the hydrostat and a rotation speed value of the prime mover.

5. Vehicle according to claim 3 or 4, further comprising processing means (UCM) configured to perform a closed loop control on the vehicle speed, controlling said transmission ratio and/or said rotation speed value of the prime mover.

6. Vehicle according to any of the preceding claims 2 - 5, wherein said processing means (UCM) are configured to acquire a pressure signal by means of a respective pressure sensor (F1, F2) relating to said pair of hydraulic ducts (F, R) and to automatically close said enabling valve (B) when a measured pressure value exceeds a predetermined pressure threshold.

7. Vehicle according to any of the claims 2 - 5, wherein said processing means (UCM) are configured to acquire a pressure signal by means of a respective pressure sensor (F1, F2) relating to said pair of hydraulic ducts (F, R) and wherein said enabling valve (B) is of the proportional type and wherein said processing means are configured to vary an outflow section of the enabling valve (B) inversely proportional to a speed error value, when said error exceeds a predetermined error threshold.

8. Vehicle according to any of the preceding claims, wherein each conduit of said pair of hydraulic conduits (F, R) is connected to said compensation valve by means of a non-return valve or both are connected by means of a shuttle valve (D).

9. Vehicle according to claim 8, wherein when said pair of hydraulic conduits (F, R) is connected to said compensation valve by means of a shuttle valve (D), then a non-return valve (C) is arranged between the shuttle valve and the supply line (PP).

10. A method for reducing or eliminating a dead band in an electro-hydraulic circuit (HC) of an agricultural or work vehicle, wherein the circuit is controlled by a human/machine interface device (J), wherein the agricultural or work vehicle comprises
- an internal combustion engine prime mover (E),
- said electro-hydraulic circuit (HC) for powering at least one hydraulic actuator (A1 - A3) by means of a respective closed-center configured control valve (V1 - V3), comprising a first hydraulic pump (P) operatively connected to the internal combustion engine (E) to be driven in rotation by it to power said valves (V1 - V3) by means of a hydraulic supply line (PP),
- a transmission having a hydrostat (HY) comprising a second hydraulic pump (HP) operatively connected to the internal combustion engine (E) to be driven in rotation by it and a hydraulic motor (HM) operatively connected to at least one vehicle wheel (WLS), wherein the second hydraulic pump and the hydraulic motor are interconnected by means of a pair of hydraulic ducts (F, R),
wherein the first hydraulic pump is variable displacement with a displacement value that is a function of a sensing signal generated by a sensing line (LS) connected downstream of said control valve (V1 - V3) and by a supply pressure signal generated by the supply line (PP),
the method comprising a step of connecting said pair of hydraulic ducts (F, R) to said supply line (PP) by means of a compensation valve (A), controlled as a function of said sensing signal and said supply signal.

11. Processing unit (UCM) configured to receive as input a pressure signal relating to each hydraulic duct of said pair of hydraulic ducts (F, R) and to control a closing of an enabling valve (B) according to claim 3, when said pressure signal exceeds a predetermined pressure threshold.

12. A unit according to claim 11, configured to acquire a signal representative of a deflection angle of an accelerator pedal (AP) and to control a vehicle speed in a closed loop, and wherein said enabling valve (B) is of the proportional type and wherein the unit is configured to vary an outflow section of the enabling valve (B) in a manner inversely proportional to a speed error value, when said error exceeds a predetermined error threshold.
